# EUROPEAN PATENT APPLICATION

(11) **EP 4 755 575 A1**
(43) Date of publication of application: **10.06.2026**
(21) Application number: 24218067.7
(22) Date of filing: 06.12.2024
(51) Int. Cl.: B23Q 15/12, G05B 19/4065

(54) **SYSTEM AND METHOD FOR CONTROLLING A CUTTING TOOL DURING A CUTTING OPERATION**

(71) Applicant: Seco Tools AB, 737 82 Fagersta (SE)
(72) Inventor: Cekal, Michael, SE-737 82 Fagersta (SE); Kryzhanivskyy, Vyacheslav, SE-737 82 Fagersta (SE)
(74) Representative: Sandvik

(57) **Abstract**

The invention relates to a system (100) for controlling a cutting tool (110) during a cutting operation comprising a sequence of n operation steps, and wherein each operation step results in an operation condition, wherein the system (100) comprises a control unit (120) operatively connected to the cutting tool (110), and at least one sensor (112) operatively connected to the control unit (120), wherein the control unit (120) is configured to compare a measured value of the operation condition for a current operation step with an expected value of the operation condition for the current operation step and determining a difference between them, and, based on this difference, determine an adjusted expected value of the operation condition for the operation steps subsequent to the current operation step. The control unit (120) is further configured to determine if the adjusted expected value of the operation step is higher than a predetermined operation condition threshold value, and, in such case, reducing a parameter value of the cutting data parameter for the operation step.

The invention also relates to a method (200) for controlling a cutting operation.

## Description

### TECHNICAL FIELD

The present invention relates to a system and a method for controlling a cutting tool during a cutting operation.

### BACKGROUND

When performing a cutting operation with a cutting tool, it is essential to have a rigid stability of the cutting operation, e.g. not too high amount of vibrations, not too high temperatures etc., in order to achieve a high quality of the performed operation and to achieve a maximum lifetime of the cutting tool.

In order to maintain the stability in the cutting operations, operation control units are commonly configured to adapt the cutting data parameters of the cutting operation, e.g. lowering the feed rate or cutting speed, in response to input from external sensors, which are arranged to detect the actual cutting conditions. Such an operation control unit is disclosed in e.g. WO 2018/108352 A1.

A problem with these systems is that in order to set the cutting data parameters required for stable operation, the operation must run in an unstable condition for some time in order for the sensors to react. As a result, the workpiece being operated by the cutting tool has areas with a bad surface quality. Depending on where on the workpiece these areas are located, there is a risk that the workpiece needs to be scrapped. Additionally, the wear of the cutting tool is accelerated, which results in a reduced lifetime of the cutting tool.

### SUMMARY OF THE INVENTION

It is an object of the present invention to overcome, or at least partially overcome, said problem by introducing a system and a method for controlling a cutting tool during a cutting operation.

The object of the present invention is achieved by means of a system for controlling a cutting tool during a cutting operation, wherein the cutting operation comprises a sequence of n operation steps, wherein n is an integer >_ 2, and wherein each operation step results in an operation condition, wherein the operation condition comprises at least any of a vibration value, a temperature value, a force value and a sound level value, wherein the system comprises:
- a control unit operatively connected to the cutting tool; and
- at least one sensor operatively connected to the control unit, wherein
   the at least one sensor is configured to generate a measurement signal indicating a measured value of the operation condition for a current operation step, wherein
   the control unit comprises a processing circuitry, and a memory, wherein the memory comprises instructions executable by the processing circuitry, wherein the processing circuitry is configured to cause the control unit to:

- receive a cutting program for the cutting operation, wherein the cutting program, for each of the n operation steps, comprises:
   - at least one initial cutting data parameter, wherein the at least one initial cutting data parameter has a parameter value, wherein the at least one initial cutting data parameter comprises at least any of a depth of cut, a radial engagement, a feed/revolution, a feed/tooth and a cutting speed;
   - an expected value of the operation condition, wherein the expected value of the operation condition is a function of the at least one initial cutting data parameter; and
   - a predetermined operation condition threshold value for the operation step; wherein
   the processing circuitry is further configured to cause the control unit to:
   - control the cutting tool according to the cutting program;
   - receive the measurement signal from the at least one sensor;
   - compare the measured value of the operation condition for the current operation step with the expected value of the operation condition for the current operation step, and determine a difference between them;
   - determine an adjusted expected value of the operation condition for each operation step subsequent to the current operation step based on said difference, wherein the adjusted expected value of the operation condition is a prediction made by a first machine-learning model;
   - determine, for each operation step subsequent to the current operation step, if the adjusted expected value of the operation condition is higher than the predetermined operation condition threshold value;
   - generate, for each of the operation steps where the adjusted expected value of the operation condition is determined to be higher than the predetermined operation condition threshold value, at least one adjusted cutting data parameter, wherein the generation of the at least one adjusted cutting data parameter comprises a reduction of the parameter value of the at least one initial cutting data parameter;
   - update the cutting program with the at least one adjusted cutting data parameter; and
   - control the cutting tool according to the updated cutting program.

By predicting the operation condition for a specific operation step before it is executed in the cutting operation, it is possible to take necessary actions to prevent the cutting tool from running in an unstable operation mode. By reducing the parameter value of the at least one initial cutting data parameter, a less aggressive cutting operation is achieved, which reduces the risk of the cutting tool operating in an unstable operation mode. Thereby, the risk of damages on the workpiece being operated by the cutting tool is reduced. Since actions are only needed to be taken for those operation steps where the adjusted expected value of the operation condition is determined to be higher than the predetermined operation condition threshold value for the operation step, the efficiency of the system is improved.

The predetermined operation condition threshold value depends on the operation performed in the operation step. Some operations may allow for a higher threshold value than others.

According to an embodiment, the predetermined operation condition threshold value is set based on a user preference, e.g. depending on how much margin the user is requesting when running the cutting operation. According to an embodiment, the predetermined operation condition threshold value is equal to the expected value of the operation condition for the operation step. According to an embodiment, the predetermined operation condition threshold value is higher than the expected value of the operation condition for the operation step.

According to an embodiment, the adjusted expected value of the operation condition is an adjusted function of the at least one initial cutting data parameter.

The cutting operation is preferably a metal cutting operation, such as a turning operation, a milling operation, a drilling operation or a boring operation.

The cutting tool is preferably a metal cutting tool, such as a turning tool, a milling tool, a drilling tool or a boring tool.

According to an embodiment, the cutting tool is configured to be mounted in a machine unit.

According to an embodiment, the cutting tool comprises at least one cutting element securely mounted in a toolholder. The cutting element might be e.g. a cutting insert, an endmill or a drill bit.

According to an embodiment, the cutting element is an indexable cutting insert.

According to an embodiment, the cutting element is a cubic boron nitride (CBN) cutting element, a polycrystalline diamond (PCD) cutting element, a cemented carbide cutting element, a cermet cutting element, or a ceramic cutting element.

The control unit is any type of electronic device suitable for performing information analysis, such as a computer or a smartphone.

According to an embodiment, the received cutting program is a cutting program recommended by the cutting tool manufacturer.

According to an embodiment, the cutting program is dependent on at least one of the following parameters: the types of cutting tool used in the cutting operation, the material of the workpiece being operated by the cutting tool, the workpiece clamping and machining limitations.

According to an embodiment, the cutting program is received by the control unit via an interface configured to input the cutting program. The cutting program might be received e.g. via automatic input from an external source such as the cutting tool manufacturer, or via manual input via a user interface such as a keyboard or a touchscreen.

According to an embodiment, the expected value of the operation condition is a predicted value based on historical operation of similar cutting tools used in similar cutting operations.

According to an embodiment, the expected value of the operation condition is predicted by a machine-learning model based on historical operation data collected by e.g. the cutting tool manufacturer. By collecting historical operation data during e.g. testing of the cutting tool by the cutting tool manufacturer during the development process, a huge amount of data is available for training the machine-learning model, which will result in a reliable prediction of the expected value of the operation condition.

Based on the difference between the measured value of the operation condition and the expected value of the operation condition for the current operation step, the first machine-learning model is configured to predict how the expected value of the operation steps subsequent to the current operation step should be adjusted in order to better correspond to the reality. According to an embodiment, this prediction is based on historical operation data of similar cutting tools used in similar cutting operations. According to an embodiment, the historical operation data is collected by the cutting tool manufacturer during e.g. testing of the cutting tool by the cutting tool manufacturer during the development process.

The first machine-learning model is any suitable machine-learning model known in the art, such as a supervised learning model or an unsupervised learning model.

The at least one sensor is at least any of a vibration sensor, a temperature sensor, a force sensor or a sound sensor.

According to an embodiment, the at least one sensor is provided at the cutting tool.

According to an embodiment, the at least one sensor is provided at the machine unit.

According to an embodiment, the at least one adjusted cutting data parameter comprises a predetermined minimum parameter value, wherein the step of generating the at least one adjusted cutting data parameter comprises a reduction of the parameter value of the at least one initial cutting data parameter to a value greater or equal to the predetermined minimum parameter value.

According to an embodiment, the predetermined operation threshold condition value is a function of at least one threshold cutting data parameter having a threshold parameter value, wherein the generation of the at least one adjusted cutting data parameter comprises the steps of:
- predicting the threshold parameter value of the at least one threshold cutting data parameter by a second machine-learning model; and
- reducing the parameter value of the at least one initial cutting data parameter to a value equal to or lower than the threshold parameter value.

By reducing the parameter value of the at least one initial cutting data parameter to a value equal to or lower than the threshold parameter value, the risk of the cutting tool operating in an unstable operation mode is further reduced due to the fulfillment of the margins requested by the user when running the cutting operation.

The second machine-learning algorithm is configured to predict the threshold parameter value by solving the inverse problem of determining which parameter values of the cutting data parameters that results in the predetermined operation threshold condition value for the respective operation step. According to an embodiment, this prediction is based on historical operation data of similar cutting tools used in similar cutting operations. According to an embodiment, the historical operation data is collected by the cutting tool manufacturer during e.g. testing of the cutting tool by the cutting tool manufacturer during the development process.

The second machine-learning model is any suitable machine-learning model known in the art, such as a supervised learning model or an unsupervised learning model.

According to an embodiment, the processing circuitry is further configured to cause the control unit to:
- determine, for each operation step subsequent to the current operation step, if the adjusted expected value of the operation condition is lower than the expected value of the operation condition;
- generate, for each of the operation steps where the adjusted expected value of the operation condition is lower than the expected value of the operation condition, at least one modified cutting data parameter, wherein the generation of the at least one modified cutting data parameter comprises an increase of the parameter value of the at least one initial cutting data parameter to a value equal to or lower than the threshold parameter value; and
- update the cutting program with the at least one modified cutting data parameter.

If the adjusted expected value of the operation condition is determined to be lower than the expected value of the operation condition, this is an indication that the cutting operation is performed with higher margins than necessary to avoid the cutting tool running in an unstable operation mode. By increasing the parameter value of the initial cutting data parameter, the cutting operation is performed with a higher operation efficiency.

According to an embodiment, the system further comprises a user interface operatively connected to the control unit, wherein the processing circuitry is further configured to cause the control unit to:
- generate a warning signal indicating which of the operation steps where the adjusted expected value of the operation condition is determined to be higher than the predetermined operation condition threshold value; and
- present a warning indicator via the user interface based on the generated warning signal.

By presenting a warning indicator via a user interface indicating which of the operation steps where the adjusted expected value of the operation condition is determined to be higher than the predetermined operation condition threshold value, necessary actions can be taken for those operation steps in order to prevent the cutting tool from running in an unstable operation mode. Since actions are only needed to be taken for those operation steps where the adjusted expected value of the operation condition is determined to be higher than the predetermined operation condition threshold value, the efficiency of the system is improved.

The user interface is any type of user interface suitable for presenting a warning indicator, e.g. a display or a speaker.

According to an embodiment, the processing circuitry is further configured to cause the control unit to:
- determine if the measured value of the operation condition for the current operation step is higher than the predetermined operation condition threshold value for the current operation step;
- generate a stop-signal if the measured value of the operation condition for the current operation step is determined to be higher than the predetermined operation condition threshold value for the current operation step; and
- stop the cutting operation based on the stop-signal.

By stopping the cutting operation if the measured value of the operation condition for the current operation step is determined to be higherthan the predetermined operation condition threshold value, the risk of damaging the workpiece being operated by the cutting tool is further reduced.

According to an embodiment, the system further comprises a database operatively connected to the control unit, wherein the processing circuitry is further configured to cause the control unit to:
- save the received measurement signal for each operation step in the database.

By saving the received measurement signal for each operation step in a database, data regarding the actual performance of the cutting operation is collected. In the embodiment where the expected value of the operation condition is determined by a machine-learning model, the collected data can be used to re-train the model in order to improve the prediction of the expected value of the operation condition.

The object of the present invention is further achieved by means of a method for controlling a cutting tool during a cutting operation, wherein the cutting operation comprises a sequence of n operation steps, wherein n is an integer ≥ 2, and wherein each operation step results in an operation condition, wherein the operation condition comprises at least any of a vibration value, a temperature value, a force value and a sound level value, wherein at least one sensor is configured to generate a measurement signal indicating a measured value of the operation condition for a current operation step, wherein the cutting tool and the at least one sensor are operatively connected to a control unit, wherein the control unit comprises a processing circuitry, and a memory, wherein the memory comprises instructions executable by the processing circuitry, wherein the processing circuitry is configured to cause the control unit to perform the method, wherein the method comprises the steps of:
- receiving a cutting program for the cutting operation, wherein the cutting program, for each of the n operation steps, comprises:
   - at least one initial cutting data parameter, wherein the at least one initial cutting data parameter has a parameter value, wherein the at least one initial cutting data parameter comprises at least any of a depth of cut, a radial engagement, a feed/revolution, a feed/tooth and a cutting speed;
   - an expected value of the operation condition, wherein the expected value of the operation condition is a function of the at least one initial cutting data parameter; and
   - a predetermined operation condition threshold value for the operation step;
- controlling the cutting tool according to the cutting program;
- receiving the measurement signal from the at least one sensor;
- comparing the measured value of the operation condition for the current operation step with the expected value of the operation condition for the current operation step, and determine a difference between them;
- determining an adjusted expected value of the operation condition for each operation step subsequent to the current operation step based on said difference, wherein the adjusted expected value of the operation condition is a prediction made by a first machine-learning model;
- determining, for each operation step subsequent to the current operation step, if the adjusted expected value of the operation condition is higher than the predetermined operation condition threshold value;
- generating, for each of the operation steps where the adjusted expected value of the operation condition is determined to be higher than the predetermined operation condition threshold value, at least one adjusted cutting data parameter, wherein the generation of the at least one adjusted cutting data parameter comprises a reduction of the parameter value of the at least one initial cutting data parameter;
- updating the cutting program with the at least one adjusted cutting data parameter; and
- controlling the cutting tool according to the updated cutting program.

According to an embodiment, the predetermined operation threshold condition value is a function of at least one threshold cutting data parameter having a threshold parameter value, wherein the step of generating at least one adjusted cutting data parameter comprises the steps of:
- predicting the threshold parameter value of the at least one threshold cutting data parameter by a second machine-learning model; and
- reducing the parameter value of the at least one initial cutting data parameter to a value equal to or lower than the threshold parameter value.

According to an embodiment, the method further comprises the steps of:
- determining, for each operation step subsequent to the current operation step, if the adjusted expected value of the operation condition is lower than the expected value of the operation condition;
- generating, for each of the operation steps where the adjusted expected value of the operation condition is lower than the expected value of the operation condition, at least one modified cutting data parameter, wherein the generation of the at least one modified cutting data parameter comprises an increase of the parameter value of the at least one initial cutting data parameter to a value equal to or lower than the threshold parameter value; and
- updating the cutting program with the at least one modified cutting data parameter.

According to an embodiment, the control unit is operatively connected to a user interface, wherein the method further comprises the steps of:
- generating a warning signal indicating which of the operation steps where the adjusted expected value of the operation condition is determined to be higher than the predetermined operation condition threshold value; and
- presenting a warning indicator via the user interface based on the generated warning signal.

According to an embodiment, the method further comprises the steps of:
- determining if the measured value of the operation condition for the current operation step is higher than the predetermined operation condition threshold value for the current operation step;
- generating a stop-signal if the measured value of the operation condition for the current operation step is determined to be higher than the predetermined operation condition threshold value for the current operation step; and
- stopping the cutting operation based on the stop-signal.

According to an embodiment, the control unit is operatively connected to a database, wherein the method further comprises the steps of:
- saving the received measurement signal for each operation step in the database.

The object of the present invention is further achieved by means of a computer program comprising computer readable code means to be run in the system described above, which computer readable code means when run in the system causes the system to perform the method described above.

The object of the present invention is further achieved by means of a carrier containing the computer program described above, wherein the carrier is one of an electronic signal, optical signal, radio signal or computer readable storage medium.

### BRIEF DESCRIPTION OF THE DRAWINGS

Figure 1 schematically illustrates a system for controlling a cutting tool during a cutting operation according to an embodiment of the invention.
Figure 2 illustrates a flowchart of a method for controlling a cutting tool during a cutting operation according to an embodiment of the invention.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

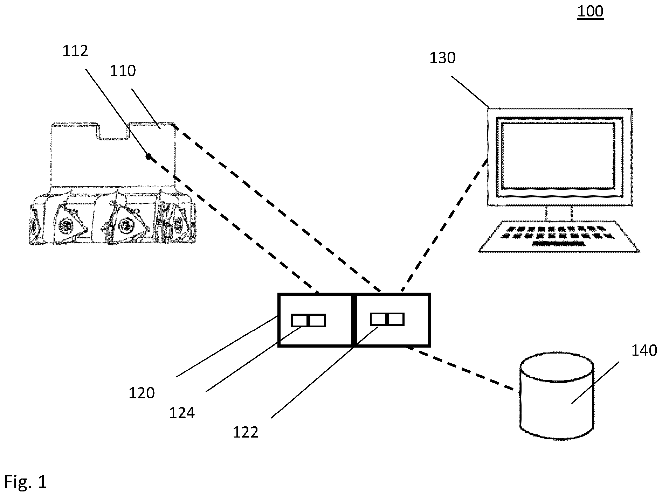

Figure 1 schematically illustrates a system (100) for controlling a cutting tool (110) during a cutting operation according to an embodiment of the invention. The system (100) comprises a cutting tool (110) in form of a milling cutter operatively connected to a control unit (120). The control unit (120) comprises a processing circuitry (122), and a memory (124), wherein the memory (124) comprises instructions executable by the processing circuitry (122). The system (100) further comprises a sensor (112) attached to the cutting tool (110). The sensor (112) is operatively connected to the control unit (120), wherein the sensor (112) is configured to generate a measurement signal indicating a measured value of the operation condition for a current operation step. The system (100) further comprises a user interface (130) in form of a monitor provided with a display, and a database (140), which are operatively connected to the control unit (120).

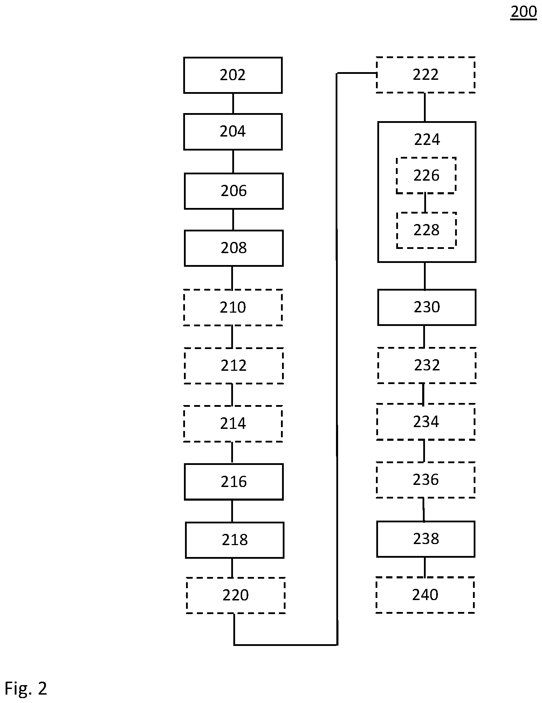

Figure 2 illustrates a flowchart of a method (200) performed by the system (100) for controlling the cutting tool (110) during a cutting operation according to an embodiment of the invention, wherein the cutting operation comprises a sequence of n operation steps, wherein n is an integer ≥ 2, and wherein each operation step results in an operation condition, wherein the operation condition comprises at least any of a vibration value, a temperature value, a force value and a sound level value. The method (200) comprises the steps of:
- receiving (202) a cutting program for the cutting operation, wherein the cutting program, for each of the n operation steps, comprises:
   - at least one initial cutting data parameter, wherein the at least one initial cutting data parameter has a parameter value, wherein the at least one initial cutting data parameter comprises at least any of a depth of cut, a radial engagement, a feed/revolution, a feed/tooth and a cutting speed;
   - an expected value of the operation condition, wherein the expected value of the operation condition is a function of the at least one initial cutting data parameter; and
   - a predetermined operation condition threshold value for the operation step;
- controlling (204) the cutting tool (110) according to the cutting program;
- receiving (206) the measurement signal from the at least one sensor (112);
- comparing (208) the measured value of the operation condition for the current operation step with the expected value of the operation condition for the current operation step, and determine a difference between them;
- determining (210) if the measured value of the operation condition for the current operation step is higher than the predetermined operation condition threshold value for the current operation step;
- generating (212) a stop-signal if the measured value of the operation condition for the current operation step is determined to be higher than the predetermined operation condition threshold value for the current operation step;
- stopping (214) the cutting operation based on the stop-signal;
- determining (216) an adjusted expected value of the operation condition for each operation step subsequent to the current operation step based on said difference, wherein the adjusted expected value of the operation condition is a prediction made by a first machine-learning model;
- determining (218), for each operation step subsequent to the current operation step, if the adjusted expected value of the operation condition is higher than the predetermined operation condition threshold value;
- generating (220) a warning signal indicating which of the operation steps where the adjusted expected value of the operation condition is determined to be higher than the predetermined operation condition threshold value;
- presenting (222) a warning indicator via the user interface (130) based on the generated warning signal;
- generating (224), for each of the operation steps where the adjusted expected value of the operation condition is determined to be higher than the predetermined operation condition threshold value, at least one adjusted cutting data parameter, wherein the generation of the at least one adjusted cutting data parameter comprises a reduction of the parameter value of the at least one initial cutting data parameter; wherein
the predetermined operation threshold condition value is a function of at least one threshold cutting data parameter having a threshold parameter value, and wherein the step of generating (224) at least one adjusted cutting data parameter comprises the steps of:
- predicting (226) the threshold parameter value of the at least one threshold cutting data parameter by a second machine-learning model; and
- reducing (228) the parameter value of the at least one initial cutting data parameter to a value equal to or lower than the threshold parameter value; wherein
the method (200) further comprises the steps of:
- updating (230) the cutting program with the at least one adjusted cutting data parameter;
- determining (232), for each operation step subsequent to the current operation step, if the adjusted expected value of the operation condition is lower than the expected value of the operation condition;
- generating (234), for each of the operation steps where the adjusted expected value of the operation condition is lower than the expected value of the operation condition, at least one modified cutting data parameter, wherein the generation of the at least one modified cutting data parameter comprises an increase of the parameter value of the at least one initial cutting data parameter to a value equal to or lower than the threshold parameter value;
- updating (236) the cutting program with the at least one modified cutting data parameter;
- controlling (238) the cutting tool (110) according to the updated cutting program; and
- saving (240) the received measurement signal for each operation step in the database (140).

Figure 2 illustrates an example of method steps. The method may comprise additional steps. Some of the method steps can be performed simultaneously. The method steps can be performed in a different order.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. In the exemplary figures, a broken line generally signifies that the feature within the broken line is optional.

## Claims

1. A system (100) for controlling a cutting tool (110) during a cutting operation, wherein the cutting operation comprises a sequence of n operation steps, wherein n is an integer ≥ 2, and wherein each operation step results in an operation condition, wherein the operation condition comprises at least any of a vibration value, a temperature value, a force value and a sound level value, wherein the system (100) comprises:
- a control unit (120) operatively connected to the cutting tool (110); and
- at least one sensor (112) operatively connected to the control unit (120), wherein the at least one sensor (112) is configured to generate a measurement signal indicating a measured value of the operation condition for a current operation step, wherein the control unit (120) comprises a processing circuitry (122), and a memory (124), wherein the memory (124) comprises instructions executable by the processing circuitry (122), **characterized in that** the processing circuitry (122) is configured to cause the control unit (120) to:
- receive a cutting program for the cutting operation, wherein the cutting program, for each of the n operation steps, comprises:
- at least one initial cutting data parameter, wherein the at least one initial cutting data parameter has a parameter value, wherein the at least one initial cutting data parameter comprises at least any of a depth of cut, a radial engagement, a feed/revolution, a feed/tooth and a cutting speed;
- an expected value of the operation condition, wherein the expected value of the operation condition is a function of the at least one initial cutting data parameter; and
- a predetermined operation condition threshold value for the operation step; wherein
the processing circuitry (122) is further configured to cause the control unit (120) to:
- control the cutting tool (110) according to the cutting program;
- receive the measurement signal from the at least one sensor (112);
- compare the measured value of the operation condition for the current operation step with the expected value of the operation condition for the current operation step, and determine a difference between them;
- determine an adjusted expected value of the operation condition for each operation step subsequent to the current operation step based on said difference, wherein the adjusted expected value of the operation condition is a prediction made by a first machine-learning model;
- determine, for each operation step subsequent to the current operation step, if the adjusted expected value of the operation condition is higher than the predetermined operation condition threshold value;
- generate, for each of the operation steps where the adjusted expected value of the operation condition is determined to be higher than the predetermined operation condition threshold value, at least one adjusted cutting data parameter, wherein the generation of the at least one adjusted cutting data parameter comprises a reduction of the parameter value of the at least one initial cutting data parameter;
- update the cutting program with the at least one adjusted cutting data parameter; and
- control the cutting tool (110) according to the updated cutting program.

2. The system (100) according to claim 1, wherein the predetermined operation threshold condition value is a function of at least one threshold cutting data parameter having a threshold parameter value, wherein the generation of the at least one adjusted cutting data parameter comprises the steps of:
- predicting the threshold parameter value of the at least one threshold cutting data parameter by a second machine-learning model; and
- reducing the parameter value of the at least one initial cutting data parameter to a value equal to or lower than the threshold parameter value.

3. The system (100) according to claim 2, wherein the processing circuitry (122) is further configured to cause the control unit (120) to:
- determine, for each operation step subsequent to the current operation step, if the adjusted expected value of the operation condition is lower than the expected value of the operation condition;
- generate, for each of the operation steps where the adjusted expected value of the operation condition is lower than the expected value of the operation condition, at least one modified cutting data parameter, wherein the generation of the at least one modified cutting data parameter comprises an increase of the parameter value of the at least one initial cutting data parameter to a value equal to or lower than the threshold parameter value; and
- update the cutting program with the at least one modified cutting data parameter.

4. The system (100) according to any of the preceding claims, wherein the system (100) further comprises a user interface (130) operatively connected to the control unit (120), wherein the processing circuitry (122) is further configured to cause the control unit (120) to:
- generate a warning signal indicating which of the operation steps where the adjusted expected value of the operation condition is determined to be higher than the predetermined operation condition threshold value; and
- present a warning indicator via the user interface (130) based on the generated warning signal.

5. The system (100) according to any of the preceding claims, wherein the processing circuitry (122) is further configured to cause the control unit (120) to:
- determine if the measured value of the operation condition for the current operation step is higher than the predetermined operation condition threshold value for the current operation step;
- generate a stop-signal if the measured value of the operation condition for the current operation step is determined to be higher than the predetermined operation condition threshold value for the current operation step; and
- stop the cutting operation based on the stop-signal.

6. The system (100) according to any of the preceding claims, wherein the system (100) further comprises a database (140) operatively connected to the control unit (120), wherein the processing circuitry (122) is further configured to cause the control unit (120) to:
- save the received measurement signal for each operation step in the database (140).

7. A method (200) for controlling a cutting tool (110) during a cutting operation, wherein the cutting operation comprises a sequence of n operation steps, wherein n is an integer ≥ 2, and wherein each operation step results in an operation condition, wherein the operation condition comprises at least any of a vibration value, a temperature value, a force value and a sound level value, wherein at least one sensor (112) is configured to generate a measurement signal indicating a measured value of the operation condition for a current operation step, wherein the cutting tool (110) and the at least one sensor (112) are operatively connected to a control unit (120), wherein the control unit (120) comprises a processing circuitry (122), and a memory (124), wherein the memory (124) comprises instructions executable by the processing circuitry (122), wherein the processing circuitry (122) is configured to cause the control unit (120) to perform the method (200), **characterized in that** the method (200) comprises the steps of:
- receiving (202) a cutting program for the cutting operation, wherein the cutting program, for each of the n operation steps, comprises:
- at least one initial cutting data parameter, wherein the at least one initial cutting data parameter has a parameter value, wherein the at least one initial cutting data parameter comprises at least any of a depth of cut, a radial engagement, a feed/revolution, a feed/tooth and a cutting speed;
- an expected value of the operation condition, wherein the expected value of the operation condition is a function of the at least one initial cutting data parameter; and
- a predetermined operation condition threshold value for the operation step;
- controlling (204) the cutting tool (110) according to the cutting program;
- receiving (206) the measurement signal from the at least one sensor (112);
- comparing (208) the measured value of the operation condition for the current operation step with the expected value of the operation condition for the current operation step, and determine a difference between them;
- determining (216) an adjusted expected value of the operation condition for each operation step subsequent to the current operation step based on said difference, wherein the adjusted expected value of the operation condition is a prediction made by a first machine-learning model;
- determining (218), for each operation step subsequent to the current operation step, if the adjusted expected value of the operation condition is higher than the predetermined operation condition threshold value;
- generating (224), for each of the operation steps where the adjusted expected value of the operation condition is determined to be higher than the predetermined operation condition threshold value, at least one adjusted cutting data parameter, wherein the generation of the at least one adjusted cutting data parameter comprises a reduction of the parameter value of the at least one initial cutting data parameter;
- updating (230) the cutting program with the at least one adjusted cutting data parameter; and
- controlling (238) the cutting tool (110) according to the updated cutting program.

8. The method (200) according to claim 7, wherein the predetermined operation threshold condition value is a function of at least one threshold cutting data parameter having a threshold parameter value, wherein the step of generating (224) at least one adjusted cutting data parameter comprises the steps of:
- predicting (226) the threshold parameter value of the at least one threshold cutting data parameter by a second machine-learning model; and
- reducing (228) the parameter value of the at least one initial cutting data parameter to a value equal to or lower than the threshold parameter value.

9. The method (200) according to claim 8, wherein the method (200) further comprises the steps of:
- determining (232), for each operation step subsequent to the current operation step, if the adjusted expected value of the operation condition is lower than the expected value of the operation condition;
- generating (234), for each of the operation steps where the adjusted expected value of the operation condition is lower than the expected value of the operation condition, at least one modified cutting data parameter, wherein the generation of the at least one modified cutting data parameter comprises an increase of the parameter value of the at least one initial cutting data parameter to a value equal to or lower than the threshold parameter value; and
- updating (236) the cutting program with the at least one modified cutting data parameter.

10. The method (200) according to any of claims 7-9, wherein the control unit (120) is operatively connected to a user interface (130), wherein the method (200) further comprises the steps of:
- generating (220) a warning signal indicating which of the operation steps where the adjusted expected value of the operation condition is determined to be higher than the predetermined operation condition threshold value; and
- presenting (222) a warning indicator via the user interface (130) based on the generated warning signal.

11. The method (200) according to any of claims 7-10, wherein the method (200) further comprises the steps of:
- determining (210) if the measured value of the operation condition for the current operation step is higher than the predetermined operation condition threshold value for the current operation step;
- generating (212) a stop-signal if the measured value of the operation condition for the current operation step is determined to be higher than the predetermined operation condition threshold value for the current operation step; and
- stopping (214) the cutting operation based on the stop-signal.

12. The method (200) according to any of claims 7-11, wherein the control unit (120) is operatively connected to a database (140), wherein the method (200) further comprises the steps of:
- saving (240) the received measurement signal for each operation step in the database (140).

13. A computer program comprising computer readable code means to be run in the system (100) according to any of claims 1-6, which computer readable code means when run in the system (100) causes the system (100) to perform the method (200) according to any of claims 7-12.

14. A carrier containing the computer program according to claim 13, wherein the carrier is one of an electronic signal, optical signal, radio signal or computer readable storage medium.
